# EUROPÄISCHE PATENTANMELDUNG

(11) **EP 4 741 982 A1**
(43) Veröffentlichungstag der Anmeldung: **13.05.2026**
(21) Anmeldenummer: 24212404.8
(22) Anmeldetag: 12.11.2024
(51) Int. Cl.: G05D 11/13

(54) **VERFAHREN ZUM STEUERN EINES DOSIERVORGANGS UND SYSTEM ZUM STEUERN EINES DOSIERVORGANGS**

(71) Anmelder: Bürkert Werke GmbH & Co. KG, 74653 Ingelfingen (DE)
(72) Erfinder: MÄRZ, Anne, 74653 Ingelfingen (DE)
(74) Vertreter: Prinz & Partner mbB

(57) **Zusammenfassung**

Ein Verfahren zum Steuern eines Dosiervorgangs mittels eines physikalischen Dosiersystems (22) und ein System (10) zum Steuern eines Dosiervorgangs werden bereitgestellt. Zumindest eine Dosieranforderung wird durch ein Analysemodul (12) empfangen. Das Analysemodul (12) ist mit dem physikalischen Dosiersystem (22) gekoppelt ist, das die Dosieranforderung umsetzt. Unterschiedliche Dosiervorgänge werden basierend auf unterschiedlichen angewendeten Dosierparametern durch das Analysemodul (12) simuliert. Dosierparameter, für die die zumindest eine Dosieranforderung erfüllt wird, werden durch das Analysemodul (12) ermittelt. Ein Ausgabesignal wird basierend auf den ermittelten Dosierparametern vom Analysemodul (12) an das physikalische Dosiersystem (22) ausgegeben. Eine Fehlerinformation wird ausgegeben, sofern das Analysemodul keine Dosierparameter ermitteln kann, für die die zumindest eine Dosieranforderung erfüllt wird.

## Beschreibung

Die Erfindung betrifft ein Verfahren zum Steuern eines Dosiervorgangs mittels eines physikalischen Dosiersystems und ein System zum Steuern eines Dosiervorgangs.

In vielen Industriebereichen ist die präzise Dosierung von Flüssigkeiten, Gasen oder anderen Medien von entscheidender Bedeutung für zahlreiche Anwendungen. Anlagenbetreiber benötigen daher maßgeschneiderte Lösungen, um verschiedene Medien in spezifischen Mengen und Frequenzen präzise dosieren zu können, beispielsweise um gewünschte Stoffgemische herstellen zu können.

Bisherige Dosiersysteme sind oft ineffizient, da sie keine Überprüfungs- und Steuerungsmechanismen bieten. Sofern vorhanden, benötigt eine Steuerungsvorrichtung zudem präzise Systeminformationen zur Steuerung und/oder Parametrisierung einer physikalischen Einheit, beispielsweise einem Sensor des Dosiersystems, um die gewünschte Dosierung tatsächlich zu ermöglichen. Selbstverständlich können Testdosierungen oder Justierungsprozesse genutzt werden, um den entsprechenden Sensor zu justieren. Allerdings verursachen derartige Testdosierungen und Justierungsprozesse entsprechende Ausfallzeiten der Dosiersysteme, wodurch die Produktivität reduziert ist. Zusätzlich unterliegen die Dosiersysteme variierenden internen und externen Einflüssen. Beispielsweise ist der Dosierprozess durch variierende äußere Umgebungsbedingungen beeinflusst. Zudem kann auch das zugrundeliegende Dosiermedium einen Einfluss auf den Dosierprozess ausüben.

Dadurch kann eine physikalische Einheit, wie ein Sensor, in Abhängigkeit der lediglich beispielhaft genannten Variablen ein divergierendes Verhalten aufweisen, wodurch Inkonsistenzen bei den Dosierprozessen auftreten, was zu einem erhöhten Ausschuss führt.

Die Aufgabe der Erfindung ist es, die Effizienz und Präzision eines Dosierprozesses und eines entsprechenden Dosiersystems zu erhöhen.

Die Aufgabe wird erfindungsgemäß gelöst durch ein Verfahren zum Steuern eines Dosiervorgangs mittels eines physikalischen Dosiersystems. Es wird zumindest eine Dosieranforderung durch ein Analysemodul empfangen. Das Analysemodul ist mit dem physikalischen Dosiersystem gekoppelt, das die Dosieranforderung umsetzt. Unterschiedliche Dosiervorgänge werden basierend auf unterschiedlichen angewendeten Dosierparametern durch das Analysemodul simuliert. Ermittelte Dosierparameter werden anhand eines Ausgabesignal vom Analysemodul an das physikalische Dosiersystem ausgegeben, sofern die zumindest eine Dosieranforderung basierend auf den durch das Analysemodul ermittelten Dosierparametern erfüllt wird. Eine Fehlerinformation wird ausgegeben, sofern das Analysemodul keine Dosierparameter ermitteln kann, für die die zumindest eine Dosieranforderung erfüllt wird.

Das Verfahren basiert auf der Erkenntnis, dass eine Simulation der Dosierparameter genutzt werden kann, um zu evaluieren, ob Dosierparameter für das Dosiersystem ermittelt werden können, durch die die Dosieranforderung erfüllt ist. Dadurch kann vermieden werden, dass die Auswertung, ob die Dosieranforderung erfüllt werden kann, auf Basis des physikalischen Dosiersystems erfolgen muss. Deshalb sind keine manuellen Testdosierungen und/oder Justierungsprozesse mehr notwendig. Zusätzlich können Ausfallzeiten des physikalischen Dosiersystems vermieden werden, wodurch die Betriebseffizienz gesteigert wird.

Da die Auswertung, ob die Dosieranforderung durch entsprechende Dosierparameter erfüllt wird, im Rahmen einer Simulation erfolgt, kann auch eine große Anzahl unterschiedlicher Dosierparameter berücksichtigt werden. Anders ausgedrückt kann die Auswertung im Hinblick auf einen größeren Parameterraum ausgeführt werden, als das in gleicher Zeit und/oder mit vergleichbarem Aufwand durch physisch durchgeführte Testdosierungen möglich ist. Deshalb ist das Verfahren gegenüber bekannten Verfahren effizienter. Insbesondere verursacht dies weniger Aufwand für den Nutzer, da der Nutzer nicht zahlreiche Testdosierungen physisch durchführen muss. Zusätzlich ist auch der Informationsgehalt für den Nutzer gegenüber bekannten Verfahren verbessert, da der Nutzer anhand der Fehlerinformation direkt Gewissheit erlangt, wenn keine Dosierparameter ermittelt werden können, anhand denen die Dosieranforderung erfüllbar ist. Diese Information erhält der Nutzer, ohne dass er dazu Testdosierungen durchführen muss.

Optional vergleicht das Analysemodul die ermittelten Dosierparameter mit Dosierparametern, die von dem physikalischen Dosiersystem anwendbar sind. So wird sichergestellt, dass das Analysemodul den gesamten Anwendungsbereich des physikalischen Dosiersystems berücksichtigt. Da von dem physikalischen Dosiersystem nicht umsetzbare Dosierparameter in der Simulation nicht berücksichtigt werden müssen, kann der Analyseaufwand so reduziert werden und die Simulation insgesamt effizient durchgeführt werden.

Bevorzugt ist das Analysemodul unabhängig vom physikalischen Dosiersystem, sodass das Analysemodul Dosiervorgänge für unterschiedliche physikalische Dosiersysteme simulieren kann. Beispielsweise kann das Analysemodul als Softwareanwendung implementiert sein. Da unterschiedliche Dosiersysteme für unterschiedliche Anwendungsfälle oft stark voneinander abweichen, beispielsweise Lebensmittelindustrie gegenüber chemische Industrie, ist der Anwendungsbereich des Verfahrens dadurch vergrößert.

Gemäß einem Aspekt kann das physikalische Dosiersystem basierend auf den ermittelten Dosierparametern durch das Analysemodul derart angesteuert und/oder parametrisiert werden, dass das physikalische Dosiersystem die zumindest eine Dosieranforderung erfüllt. Das physikalische Dosiersystem kann beispielsweise im Rahmen des von dem Analysemodul ausgegebenen Ausgabesignals angesteuert und/oder parametrisiert werden. Dadurch ist die Steuerung des Dosiersystems besonders effizient und ohne Zeitverzug möglich. Insbesondere sind keine manuellen Eingaben oder Anpassungen eines Operators notwendig. Vielmehr wird das Dosiersystem durch das Analysemodul automatisch gesteuert und/oder parametrisiert, sobald Dosierparameter ermittelt werden, durch die die Dosieranforderung erfüllt ist.

Optional kann das Analysemodul ermittelte Dosierparameter, durch die die zumindest eine Dosieranforderung erfüllt ist, zunächst an eine Benutzerschnittstelle und/oder ein Gerät anhand einer Benachrichtigung, insbesondere einer Freigabeaufforderung, ausgeben. Dadurch wird eine zusätzliche Kontrollinstanz geschaffen, bevor das physikalische Dosiersystem durch das Analysemodul beeinflusst wird.

Bevorzugt kann die Steuerung und/oder Parametrisierung des physikalischen Dosiersystems durch das Analysemodul davon abhängen, dass das Analysemodul zuvor ein Freigabesignal durch eine Nutzereingabe oder von einem Gerät empfangen hat. Somit können ungewollte Eingriffe des Analysemoduls in das physikalische Dosiersystem unterbunden werden.

Gemäß einem Aspekt simuliert das Analysemodul den Dosiervorgang in Echtzeit. Somit ist die erforderliche Zeitdauer zur Durchführung des Verfahrens besonders kurz. Zudem können durch die Echtzeitsimulation die zu dem Zeitpunkt der Dosieranforderung herrschenden Umstände durch das Analysemodul berücksichtigt werden. Dadurch können zeitabhängige Abweichungen vermieden werden. Zudem wird die Präzision und Zuverlässigkeit der Auswertung von ermittelbaren Dosierparametern erhöht.

Bevorzugt wird die Dosieranforderung durch eine Nutzereingabe oder durch ein Gerät vorgegeben. Einerseits können dadurch manuelle Anfragen an das Analysemodul gestellt werden. Andererseits kann eine Prozessleitstelle als Gerät genutzt werden, die Dosieranforderungen auftragsbasiert abarbeitet. So werden eine hohe Variabilität des Verfahrens und eine hohe Betriebseffizienz des Dosiersystems erzielt.

In einigen Ausgestaltungen umfasst das physikalische Dosiersystem zumindest einen Prozesssensor, der eingerichtet ist, eine Prozessvariable während des Dosiervorgangs zu erfassen, die durch den Dosiervorgang des physikalischen Dosiersystems beeinflusst ist, beispielsweise eine in Bezug auf das Dosiermedium erfasste Prozessvariable. Zudem übermittelt der Prozesssensor die erfasste Prozessvariable an das Analysemodul. Das Analysemodul berücksichtigt die erfasste Prozessvariable beim Simulieren der unterschiedlichen Dosiervorgänge. Dadurch basiert die Simulation, die von dem Analysemodul durchgeführt wird, zumindest teilweise auf den realen Dosierbedingungen des physikalischen Dosiersystems. So wird gewährleistet, dass die Simulation der unterschiedlichen Dosiervorgänge an die realen Umstände angepasst ist. Deshalb wird die Aussagekraft der von dem Analysemodul durchgeführten Simulationen erhöht. Anders ausgedrückt können die Analyseergebnisse vom Analysemodul mit einem höheren Vertrauensniveau ermittelt werden. Dabei betreffen die Analyseergebnisse einerseits Dosierparameter, durch die die Dosieranforderung erfüllt wird, oder andererseits die Tatsache, dass keine solchen Dosierparameter ermittelt werden können.

Bevorzugt ist die Prozessvariable ein interner Parameter des physikalischen Dosiersystems.

Beispielsweise kann der Prozesssensor eingerichtet sein, um als Prozessvariable einen Druck, einen Massendurchfluss, eine Durchflussmenge, ein Dosiermedium, eine Temperatur, eine Zeit, ein Gewicht oder Kombinationen davon zu erfassen. Dadurch können verschiedenste Prozessvariablen genutzt werden, um die Präzision der Simulation anhand des Analysemodul zu erhöhen.

Physikalische Dosiersysteme weisen häufig eine große Anzahl entsprechender Prozesssensoren auf. Daher kann das Analysemodul natürlich auch eine Vielzahl erfasster Prozessvariablen beim Simulieren der unterschiedlichen Dosiervorgänge berücksichtigen, wodurch die Eigenschaften des physikalischen Dosiersystems präzise berücksichtigt werden können.

Optional umfasst das physikalische Dosiersystem zumindest einen Umgebungssensor. Der Umgebungssensor ist eingerichtet, zumindest einen Umgebungsparameter des physikalischen Dosiersystems zu erfassen und an das Analysemodul zu übermitteln. Das Analysemodul berücksichtigt den zumindest einen erfassten Umgebungsparameter beim Simulieren der unterschiedlichen Dosiervorgänge. So kann die Parameterbasis für die Simulierungen der Dosiervorgänge zusätzlich an die realen Umgebungsbedingungen des physikalischen Dosiersystems angepasst werden. Dies führt dazu, dass die simulierten Dosiervorgänge die realen Umstände des physikalischen Dosiersystems noch präziser widerspiegeln. Dadurch wird das Vertrauensniveau der Analyseergebnisse des Analysemoduls nochmals erhöht.

Bevorzugt betrifft der Umgebungsparameter eine externe, auf das physikalische Dosiersystem einwirkende Variable.

Optional ist der Umgebungssensor eingerichtet, um einen Druck, eine Temperatur, eine Luftfeuchtigkeit, eine Uhrzeit, eine Helligkeit, eine in der Umgebung angeordnete Substanz, elektromagnetische Störfelder oder Kombinationen davon zu erfassen. Dadurch kann die Parameterbasis für die simulierten Dosiervorgänge auf unterschiedliche Weise vergrößert werden. Insbesondere werden so eventuelle Störeinflüsse berücksichtigt, also etwaige Quellen, die einen Einfluss auf den physikalischen Dosiervorgang haben.

Gemäß einem Aspekt kann beim Simulieren der unterschiedlichen Dosiervorgänge ein virtuelles Dosiersystem berücksichtigt werden. Das virtuelle Dosiersystem ist in einer virtuellen Prozessumgebung ausgebildet, die korrespondierend zu einer realen Prozessumgebung ausgebildet ist, in der das physikalische Dosiersystem angeordnet ist. Dadurch verhält sich das virtuelle Dosiersystem in der virtuellen Prozessumgebung korrespondierend zum physikalischen Dosiersystem in der realen Prozessumgebung. In anderen Worten kann das gesamte physikalische Dosiersystem für die Simulation anhand eines virtuellen Dosiersystems nachgebildet werden, und zwar unter Berücksichtigung einer entsprechenden virtuellen Prozessumgebung. So braucht das physikalische Dosiersystem für die Analyse durch das Analysemodul in keiner Weise beeinflusst werden und kann ununterbrochen weiterbetrieben werden.

Unter der realen Prozessumgebung ist die tatsächliche Umgebung zu verstehen, innerhalb der das physikalische Dosiersystem angeordnet ist, also beispielsweise in einer Anlage oder einer Fabrik. Die reale Prozessumgebung weist im Umfeld des physikalischen Dosiersystems herrschende Umgebungseigenschaften auf, die die Betriebsweise des physikalischen Dosiersystems beeinflussen, beispielsweise eine Temperatur, ein Druck, Lichtverhältnisse, Substanzen, elektromagnetische Störfelder und andere Umgebungsparameter. Durch die verschiedenen Einflussfaktoren wird die Betriebsweise des physikalischen Dosiersystem über die Zeit beeinflusst, insbesondere aufgrund von Veränderungen der Umgebungseigenschaften. Insbesondere kann das physikalische Dosiersystem aufgrund der Umgebungseigenschaften ein zeitlich variierendes Verhalten aufweisen.

Die virtuelle Prozessumgebung ist der realen Prozessumgebung nachempfunden, sodass die in der realen Prozessumgebung herrschenden Umgebungseigenschaften in der virtuellen Prozessumgebung für das virtuelle Dosiersystem simuliert werden. Dies führt dazu, dass das virtuelle Dosiersystem ein Verhalten aufweist, das den Auswirkungen der Umgebungseigenschaften der realen Prozessumgebung nachempfunden ist. Anders ausgedrückt kann die virtuelle Prozessumgebung als Simulation der realen Prozessumgebung angesehen werden.

Durch das korrespondierende Verhalten des virtuellen Dosiersystems in der virtuellen Prozessumgebung zum physikalischen Dosiersystem in der realen Prozessumgebung wird eine belastbare und zuverlässige Aussage darüber ermöglicht, ob Dosierparameter ermittelt werden können, für die die Dosieranforderung erfüllt ist. Da das virtuelle Dosiersystem beim Simulieren der unterschiedlichen Dosiervorgänge berücksichtigt wird, können so beispielsweise auch Betriebssituationen des physikalischen Dosiersystems vorausschauend anhand einer variierenden virtuellen Prozessumgebung beurteilt werden. Somit ist der Parameterraum, hinsichtlich dem die Dosiervorgänge simuliert werden können, im Vergleich zu bisher durchgeführten Testdosierungen, die am physikalischen Dosiersystem in der realen Prozessumgebung durchgeführt werden, vergrößert. Anders ausgedrückt können durch das Analysemodul Dosiervorgänge hinsichtlich Eigenschaften der Prozessumgebung simuliert und beurteilt werden, die bislang nicht oder nur unzuverlässig beurteilt werden können.

Bevorzugt wird über das virtuelle Dosiersystem eine virtuelle Prozessvariable des zu dosierenden Mediums simuliert. Die virtuelle Prozessvariable ist korrespondierend zu einer realen Prozessvariable, die von einem Prozesssensor des physikalischen Dosiersystems erfasst wird. Ein Offset zwischen der virtuellen Prozessvariable und der realen Prozessvariable wird ermittelt.

Auch wenn sich das virtuelle Dosiersystem in der virtuellen Prozessumgebung generell korrespondierend zum physikalischen Dosiersystem in der realen Prozessumgebung verhält, so können unbekannte, auf das physikalische Dosiersystem einwirkende Einflussfaktoren auftreten, beispielsweise nicht-vorhersehbare Änderungen der Umgebungsbedingungen. Derartige Einflüsse führen zu einer Abweichung zwischen dem zeitlichen Verhalten des physikalischen Dosiersystems und dem zeitlichen Verhalten des virtuellen Dosiersystems. Auch können Alterungs- oder Verschleißeffekte, die bei der virtuellen Komponente nicht korrespondierend berücksichtigt werden, zu Abweichungen führen. Die in Bezug auf die reale Prozessumgebung erfasste reale Prozessvariable stimmt dann im Allgemeinen nicht mehr mit der virtuellen Prozessvariable in der virtuellen Prozessumgebung überein, sodass es zu der Abweichung kommt. In Bezug auf diese Abweichung kann der Offset ermittelt werden, der genutzt werden kann, um eine Angleichung des virtuellen Dosiersystems an das physikalische Dosiersystem zu erzielen.

Optional wird das Ausgabesignal basierend auf dem ermittelten Offset angepasst. Beispielsweise können die auf dem Ausgabesignal beruhenden Dosierparameter anhand des Offsets derart angepasst werden, dass die reale Prozessvariable wieder mit der virtuellen Prozessvariable korrespondiert.

In einer Alternative kann der ermittelte Offset auch genutzt werden, um das virtuelle Dosiersystem in der virtuellen Prozessumgebung anzupassen. Sofern die Messwerte der realen Prozessvariable bei der Simulation der Dosiervorgänge berücksichtigt werden, kann der Offset beispielsweise bei der Interpretation der erfassten Messwerte der realen Prozessvariable berücksichtigt werden. Das führt zu einer Angleichung des zeitlichen Verhaltens des virtuellen Dosiersystems zu dem des physikalischen Dosiersystems.

Es wird also entweder das Ausgabesignal basierend auf dem Offset angepasst oder der Offset zur Anpassung des virtuellen Dosiersystems berücksichtigt. Beide Alternativen gewährleisten, dass die Analyseergebnisse des Analysemoduls eine hohe Präzision aufweisen und zuverlässig sind, also ein hohes Vertrauensniveau aufweisen. Anders ausgedrückt, ist die Wahrscheinlichkeit, dass Analyseergebnisse des Analysemoduls zutreffend sind, dann erhöht.

Wird der Offset zur Anpassung des virtuellen Dosiersystems genutzt, hat dies zudem den Vorteil, dass das physikalische Dosiersystem trotz des Offsets in keiner Weise beeinflusst werden muss. Beispielsweise müssen weder angepasste Steuersignale übermittelt werden, noch müssen aktualisierte Betriebsparameter (Parametrisierungen) bereitgestellt werden.

Optional wird das Verfahren erneut ausgeführt, sofern das Ausgabesignal basierend auf dem ermittelten Offset angepasst wird oder sofern das virtuelle Dosiersystem in der virtuellen Prozessumgebung basierend auf dem Offset angepasst wird. Aufgrund des Offsets könnten die Analyseergebnisse des Analysemoduls (ermittelte Dosierparameter oder Schlussfolgerung, dass keine geeigneten Dosierparameter ermittelt werden können) unpräzise sein. Nach der Angleichung des physikalischen Dosiersystems an das virtuelle Dosiersystem kann das Verfahren daher erneut ausgeführt werden, um zuverlässige und präzise Analyseergebnisse zu erzielen.

Bevorzugt kann die zumindest eine Dosieranforderung eine Dosiermenge, eine Dosierfrequenz und/oder ein zu dosierendes Medium umfassen. Somit können Dosiervorgänge für eine große Anzahl und unterschiedliche Typen von Dosieranforderungen beurteilt werden.

Gemäß einem weiteren Aspekt betrifft die Erfindung auch ein Computerprogrammprodukt, umfassend Befehle, die bei der Ausführung des Computerprogrammprodukts durch einen Prozessor diesen veranlassen, das zuvor beschriebene Verfahren zumindest teilweise auszuführen, insbesondere die Empfangs-, Simulations-, Rechen- und Ausgabeschritte. Die Vorteile, die durch das hierin beschriebene Verfahren erreicht werden, werden in entsprechender Weise auch durch das Computerprogrammprodukt erzielt.

Gemäß einem zusätzlichen Aspekt betrifft die Erfindung auch ein computerlesbares Speichermedium, umfassend Befehle, die bei der Ausführung des Computerprogrammprodukts durch einen Prozessor diesen veranlassen, das zuvor beschriebene Verfahren zumindest teilweise auszuführen, insbesondere die Empfangs-, Simulations-, Rechen- und Ausgabeschritte. Die Vorteile, die durch das hierin beschriebene Verfahren erreicht werden, werden in entsprechender Weise auch durch das computerlesbare Speichermedium erzielt.

Die Aufgabe wird erfindungsgemäß zudem durch ein System zum Steuern eines Dosiervorgangs gelöst. Das System umfasst zumindest ein physikalisches Dosiersystem und ein Analysemodul. Das Analysemodul ist mit dem physikalischen Dosiersystem gekoppelt. Das Analysemodul ist eingerichtet, unterschiedliche Dosiervorgänge des physikalischen Dosiersystems basierend auf zumindest einer Dosieranforderung zu simulieren. Das Analysemodul ist eingerichtet, ermittelte Dosierparameter anhand eines Ausgabesignals an das physikalische Dosiersystem auszugeben, sofern die zumindest eine Dosieranforderung basierend auf den von dem Analysemodul ermittelten Dosierparametern erfüllt wird. Das Analysemodul ist auch eingerichtet, um eine Fehlerinformation auszugeben, sofern keine Dosierparameter ermitteln werden konnten, für die die zumindest eine Dosieranforderung erfüllt wird.

Die Vorteile, die durch das Verfahren erreicht werden, werden in entsprechender Weise auch durch das System erzielt. Insbesondere können die Effizienz und die Präzision der Beurteilung der Dosierparameter unter Berücksichtigung der Dosieranforderung gegenüber bisherigen Ansätzen erhöht werden, da ein Betrieb des physikalischen Dosiersystems nicht unterbrochen werden muss und da die Beurteilung für einen großen Parameterraum der Dosierparameter durchgeführt werden kann.

Optional umfasst das physikalische Dosiersystem Ventile, Pumpen, Sensoren, wie beispielsweise Drucksensoren oder Durchflusssensoren, oder Kombinationen davon. Somit kann das physikalische Dosiersystem für eine Vielzahl unterschiedlicher Dosiervorgänge genutzt werden.

Das Analysemodul kann insbesondere einen Prozessor umfassen.

Optional ist das Analysemodul eingerichtet, das virtuelle Dosiersystem in einer Cloud-Umgebung zu simulieren. Dadurch wird ein dezentraler Zugriff auf das virtuelle Dosiersystem ermöglicht, sodass die Simulationstopologie für die Kalibrierung unterschiedlicher physikalischer Dosiersysteme genutzt werden kann.

Bevorzugt weist das System eine Kommunikationsschnittstelle und/oder eine Nutzerschnittstelle auf, die mit dem Analysemodul gekoppelt sind. Dadurch werden Kommunikationsverbindungen, Nutzereingaben, wie ein Freigabesignal, und Benachrichtigungen ermöglicht, wodurch beispielsweise auch die Dosieranforderung auf unterschiedliche Arten für das System bereitgestellt werden kann.

Bei der Dosieranforderung handelt es sich um die gewünschte Dosierung (Dosiermenge und/oder Dosierfrequenz) eines bestimmten Mediums, die durch das physikalische Dosiersystem erzielt werden soll.

Bei den Dosierparametern handelt es sich um Parameter, die beim Dosiervorgang vom physikalischen Dosiersystem verwendet werden, insbesondere von physikalischen Einheiten (Dosierkomponenten) des Dosiersystems, um die Dosieranforderung möglichst zu erfüllen, also die gewünschte Dosierung zu erreichen.

Die Erfindung sowie weitere vorteilhafte Ausführungsformen und Weiterbildungen derselben werden im Folgenden anhand der in den Zeichnungen dargestellten Beispiele näher beschrieben und erläutert. Es zeigen:
- Fig. 1 ein erfindungsgemäßes System zum Steuern eines Dosiervorgangs, und
- Fig. 2 ein erfindungsgemäßes Verfahren zum Steuern eines Dosiervorgangs mittels eines physikalischen Dosiersystems.

Alle nachstehend in Bezug auf die Ausführungsbeispiele und/oder die begleitenden Figuren genannten Merkmale können allein oder in einer beliebigen Unterkombination mit Merkmalen der Erfindung, einschließlich Merkmalen bevorzugter Ausführungsformen, kombiniert werden.

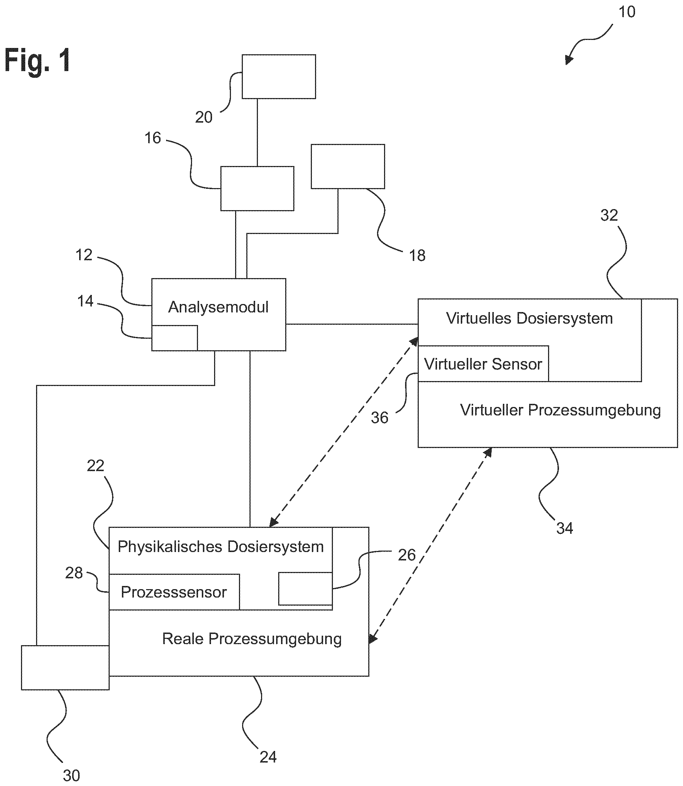

Fig. 1 zeigt ein erfindungsgemäßes System 10 zum Steuern eines Dosiervorgangs.

Das System 10 umfasst ein Analysemodul 12, das einen Prozessor 14 aufweist.

Das Analysemodul 12 ist gemäß dieser Ausführungsform mit einer Kommunikationsschnittstelle 16 und einer Nutzerschnittstelle 18 gekoppelt.

Anhand der Kommunikationsschnittstelle 16 kann das Analysemodul 12 mit externen Geräten kommunizieren, und von diesen beispielsweise eine Dosieranforderung und/oder ein Freigabesignal empfangen.

Das externe Gerät kann beispielsweise eine Prozessleitstelle 20 sein, die Dosierprozesse auslöst und/oder überwacht.

Anhand der Nutzerschnittstelle 18 kann ein Nutzer des Systems 10 manuelle Eingaben tätigen. Dabei kann der Nutzer beispielsweise (manuell) eine Dosieranforderung und/oder ein Freigabesignal für das Analysemodul 12 eingeben, also eine Freigabe erteilen.

Anhand der Kommunikationsschnittstelle 16 und der Nutzerschnittstelle 18 kann das Analysemodul 12 Benachrichtigungen oder Aufforderungen an ein externes Gerät und/oder eine Nutzerschnittstelle 18 übermitteln, beispielsweise eine Fehlerinformation und/oder eine Freigabeaufforderung.

Das System 10 weist ferner ein physikalisches Dosiersystem 22 auf, das in einer realen Prozessumgebung 24 angeordnet ist. Das Analysemodul 12 ist mit dem physikalischen Dosiersystem 22 gekoppelt.

Bei der realen Prozessumgebung 24 handelt es sich beispielsweise um eine prozesstechnische Anlage, in der das physikalische Dosiersystem 22 angeordnet ist.

Das physikalische Dosiersystem 22 umfasst Dosierkomponenten 26, wie Ventile, Pumpen, Sensoren, beispielsweise Drucksensoren oder Durchflusssensoren, oder Kombinationen davon. Anhand der Dosierkomponenten 26 können Dosiervorgänge ausgeführt werden, um zumindest ein Dosiermedium eines gewünschten Typs entsprechend einer gewünschten Dosiermenge und/oder Dosierfrequenz bereitzustellen. Die unterschiedlichen Dosiervorgänge weichen dabei im Hinblick auf jeweilige Dosierparameter voneinander ab, die beispielsweise durch die Dosierkomponenten 26 eingestellt und angepasst werden können.

Das Analysemodul 12 ist eingerichtet, um ein Ausgabesignal an das physikalische Dosiersystem 22 auszugeben. Anhand des Ausgabesignals kann die Funktionsweise der Dosierkomponenten 26 beeinflusst werden und/oder können die Dosierkomponenten 26 durch das Analysemodul 12 parametrisiert werden, um Dosiervorgänge des physikalischen Dosiersystems 22 anzupassen.

Optional weist das physikalische Dosiersystem 22 zumindest einen Prozesssensor 28 auf. Der Prozesssensor 28 ist eingerichtet, eine reale Prozessvariable, die durch den Dosiervorgang beeinflusst ist, während des Dosiervorgangs zu erfassen und an das Analysemodul 12 zu übermitteln. Die Prozessvariable kann eine Eigenschaft des Dosiermediums sein.

Gemäß dieser Ausführungsform weist das System 10 zusätzlich zumindest einen Umgebungssensor 30 auf. Der Umgebungssensor 30 ist eingerichtet, zumindest einen Umgebungsparameter des physikalischen Dosiersystems 22, insbesondere hinsichtlich der realen Prozessumgebung 24 zu erfassen und an das Analysemodul 12 zu übermitteln. Beispielhafte Umgebungsparameter können ein Druck, eine Temperatur, eine Helligkeit, eine Luftfeuchtigkeit und andere Parameter sein, die die Umgebung des physikalischen Dosiersystems 22 definieren.

Das Analysemodul 12 ist eingerichtet, um Dosiervorgänge des physikalischen Dosiersystems 22 mit unterschiedlichen Dosierparametern zu simulieren.

Dabei kann das Analysemodul 12 bevorzugt ein virtuelles Dosiersystem 32 bei der Simulation der unterschiedlichen Dosiervorgänge berücksichtigen. Hinsichtlich des virtuellen Dosiersystems 32 wird auch eine virtuelle Prozessumgebung 34 durch das Analysemodul 12 berücksichtigt.

Die virtuelle Prozessumgebung 34 wird durch das Analysemodul 12 derart simuliert, dass sie korrespondierend zur realen Prozessumgebung 24 ausgebildet ist. Insbesondere werden die in der realen Prozessumgebung 24 herrschenden, evtl. variierenden, Umgebungsbedingungen innerhalb der virtuellen Prozessumgebung 34 nachgebildet, soweit es sich nicht um nicht-vorhersehbare Änderungen der realen Umgebungsbedingungen der realen Prozessumgebung 24 handelt. Beispielsweise können zur Nachbildung der realen Umgebungsbedingungen in der virtuellen Prozessumgebung 34 Messdaten des Umgebungssensors 30 genutzt werden, insbesondere in Echtzeit erfasste Messdaten, also in Echtzeit erfasste Umgebungsparameter. Dadurch ist das virtuelle Dosiersystem 32 in der virtuellen Prozessumgebung 34 prinzipiell Schwankungen der Umgebungsbedingungen der virtuellen Prozessumgebung 34 ausgesetzt, die mit den Schwankungen der realen Umgebungsbedingungen in der realen Prozessumgebung 24 korrespondieren.

In entsprechender Weise wird das virtuelle Dosiersystem 32 durch das Analysemodul 12 derart berücksichtigt, dass es sich in der virtuellen Prozessumgebung 34 korrespondierend zum physikalischen Dosiersystem 22 in der realen Prozessumgebung 24 verhält, insbesondere in Echtzeit. In anderen Worten kann das physikalische Dosiersystem 22, das in der realen Prozessumgebung 24 angeordnet ist, durch das Analysemodul 12 anhand eines virtuellen Dosiersystems 32, für das eine virtuelle Prozessumgebung 34 berücksichtigt wird, nachgebildet werden.

Optional berücksichtigt das Analysemodul 12 einen virtuellen Sensor 36 als Teil des virtuellen Dosiersystems 32, der sich korrespondierend zum Prozesssensor 28 des physikalischen Dosiersystems 22 verhält. Da der Prozesssensor 28 des physikalischen Dosiersystems 22 eingerichtet ist, um eine reale Prozessvariable zu erfassen, die von den Dosiervorgängen des physikalischen Dosiersystems 22 abhängt, ist durch das Analysemodul 12 dann hinsichtlich des virtuellen Sensors 36 eine virtuelle Prozessvariable simulierbar, die von dem virtuellen Sensor 36 hinsichtlich des virtuellen Dosiersystems 32 erfasst wird. Generell verhält sich die virtuelle Prozessvariable korrespondierend zur realen Prozessvariable, die durch den Prozesssensor 28 erfasst werden kann.

Aufgrund von nicht vorhersehbaren Schwankungen der Umgebungsbedingungen der realen Prozessumgebung 24 oder nicht vorhersehbaren Änderungen der Eigenschaften des physikalischen Dosiersystems 22 kann die anhand des Prozesssensors 28 erfasste reale Prozessvariable von der virtuellen Prozessvariable, die durch das Analysemodul 12 im Hinblick auf den virtuellen Sensor 36 simuliert wird, abweichen. Das Analysemodul 12 ist eingerichtet, um einen Offset zwischen der realen Prozessvariable und der virtuellen Prozessvariable zu ermitteln und zu berücksichtigen.

Der Offset zwischen der realen Prozessvariable (Istwert), die anhand des Prozesssensors 28 erfasst wird, und der virtuellen Prozessvariable (Sollwert), die im Hinblick auf den virtuellen Sensor 36 simuliert wird, ist gleichbedeutend mit einer Zustandsänderung des physikalischen Dosiersystems 22. Die Zustandsänderung führt dazu, dass sich das physikalische Dosiersystem 22 nicht mehr korrespondierend zum virtuellen Dosiersystem 32 verhält. Anders ausgedrückt besteht dann das Risiko, dass die vom Analysemodul 12 für unterschiedliche Dosierparameter simulierten Dosiervorgänge nicht mehr die realen Umstände des physikalischen Dosiersystems 22 präzise und angemessen wiedergeben. Die Auswertung, die von dem Analysemodul 12 bereitgestellt wird, kann dann fehlerhaft sein oder zumindest ein reduziertes Vertrauensniveau aufweisen, also unzuverlässiger sein.

Der Offset kann deshalb vom Analysemodul 12 entweder hinsichtlich des an das physikalische Dosiersystem 22 ausgegebenen Ausgabesignals oder bei der Simulation der Dosiervorgänge mit unterschiedlichen Dosierparametern berücksichtigt werden.

Wird der Offset im Hinblick auf das Ausgabesignal berücksichtigt, wird das physikalische Dosiersystem 22 anhand des Offsets im Hinblick auf das virtuelle Dosiersystem 32 kalibriert.

Wird der Offset durch das Analysemodul 12 bei der Simulation der Dosiervorgänge berücksichtigt, wird die Simulation des virtuellen Dosiersystems 32 an die realen Umstände des physikalischen Dosiersystems 22 angepasst.

Die durch das Analysemodul 12 simulierten Dosiervorgänge können beispielsweise in einer Cloud-Umgebung simuliert werden.

In einer Alternative kann das Analysemodul 12 Teil eines Edge-Geräts sein.

Generell kann das Analysemodul 12 auch als Serveranwendung ausgebildet sein, sodass ein dezentraler Zugriff auf das Analysemodul 12 ermöglicht ist, beispielsweise anhand der Kommunikationsschnittstelle 16.

Das Analysemodul 12 ist auch nicht auf ein einzelnes physikalisches Dosiersystem 22 beschränkt. Anders ausgedrückt ist das Analysemodul 12 eingerichtet, unterschiedliche Dosiervorgänge mit unterschiedlichen Dosierparametern im Hinblick auf unterschiedliche physikalische Dosiersysteme 22 in unterschiedlichen realen Prozessumgebungen 24 zu simulieren. Dazu kann das Analysemodul 12 beispielsweise unterschiedliche virtuelle Dosiersysteme 32 simulieren.

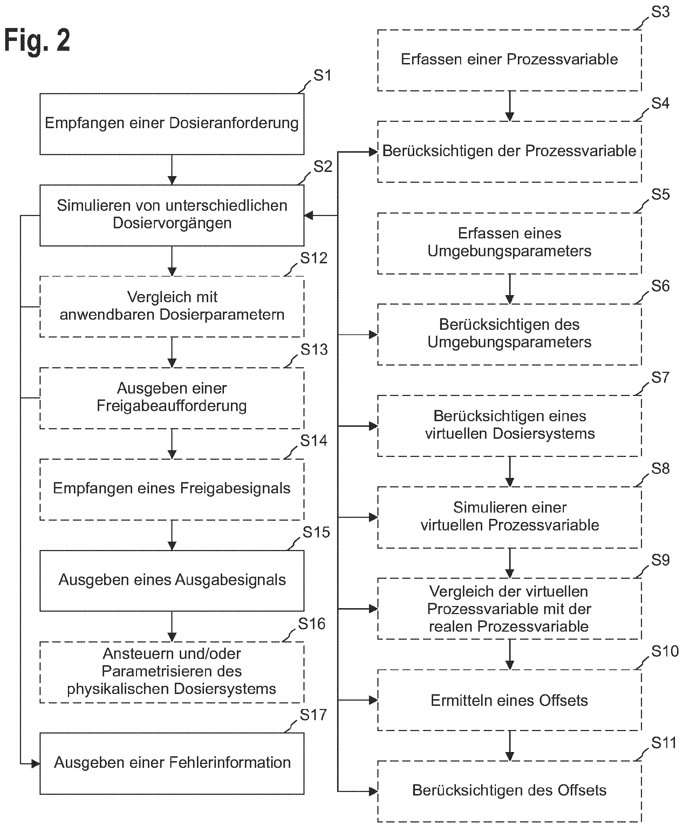

Fig. 2 zeigt ein erfindungsgemäßes Verfahren zum Steuern eines Dosiervorgangs mittels eines physikalischen Dosiersystems 22. Optionale Schritte sind gestrichelt dargestellt.

Im Schritt S1 empfängt das Analysemodul 12 zumindest eine Dosieranforderung, die anhand des physikalischen Dosiersystems 22 umgesetzt werden soll. Beispielsweise kann die Dosieranforderung über die Kommunikationsschnittstelle 16 oder mit Hilfe der Nutzerschnittstelle 18 empfangen werden. Anhand der Dosieranforderung wird beispielsweise eine Dosiermenge, eine Dosierfrequenz und/oder ein zu dosierendes Medium spezifiziert.

Im nachfolgenden Schritt S2 simuliert das Analysemodul 12 unterschiedliche Dosiervorgänge basierend auf unterschiedlichen angewendeten Dosierparametern.

Bevorzugt werden die unterschiedlichen Dosiervorgänge vom Analysemodul 12 in Echtzeit simuliert. Dadurch stehen die Analyseergebnisse des Analysemoduls 12 besonders schnell zur Verfügung.

Der Schritt S2 kann in vielfältiger Weise durch einzelne oder mehrere der optionalen Schritte S3 bis S11 weitergebildet werden.

Beispielsweise kann entsprechend dem optionalen Schritt S3 eine Prozessvariable erfasst werden. Dazu kann beispielsweise ein Prozesssensor 28 des physikalischen Dosiersystems 22 genutzt werden. Die Prozessvariable ist dabei durch die Dosiervorgänge des physikalischen Dosiersystems 22 beeinflusst. Die so erfasste Prozessvariable kann entsprechend dem nachfolgenden optionalen Schritt S4 bei der Simulation der unterschiedlichen Dosiervorgänge durch das Analysemodul 12 berücksichtigt werden.

Bevorzugt ist die Prozessvariable ein Druck, ein Massendurchfluss, eine Durchflussmenge, ein Dosiermedium, eine Temperatur, eine Zeit, ein Gewicht oder Kombinationen davon. Durch die Berücksichtigung der Prozessvariablen bei der Simulation der unterschiedlichen Dosiervorgänge können die simulierten Dosiervorgänge an das physikalische Dosiersystem 22 angepasst werden.

Entsprechend dem optionalen Schritt S5 kann auch ein Umgebungsparameter des physikalischen Dosiersystems 22 erfasst werden, beispielsweise durch einen Umgebungssensor 30.

Bevorzugt umfasst der Umgebungsparameter einen Druck, eine Temperatur, eine Luftfeuchtigkeit, eine Uhrzeit, eine Helligkeit, eine in der Umgebung angeordnete Substanz, elektromagnetische Störfelder oder Kombinationen davon. Bei dem Umgebungsparameter handelt es sich um eine externe Variable, die auf das physikalische Dosiersystem 22 einwirkt und deshalb die anhand des physikalischen Dosiersystems 22 ausgeführten Dosiervorgänge beeinflusst.

Das Analysemodul 12 kann den erfassten Umgebungsparameter bei der Simulation der unterschiedlichen Dosiervorgänge entsprechend dem nachfolgenden optionalen Schritt S6 berücksichtigen.

Während anhand des optionalen Schritts S4 interne Prozessvariablen des physikalischen Dosiersystems 22 bei der Simulation der unterschiedlichen Dosiervorgänge durch das Analysemodul 12 berücksichtigt werden, werden anhand des optionalen Schritts S6 externe Umgebungsparameter berücksichtigt, die einen indirekten Einfluss auf die Dosiervorgänge des physikalischen Dosiersystems 22 ausüben.

Der Schritt S2 kann auch anhand des optionalen Schritts S7 weitergebildet werden. In diesem Fall berücksichtigt das Analysemodul 12 beim Simulieren der unterschiedlichen Dosiervorgänge das virtuelle Dosiersystem 32, das in der virtuellen Prozessumgebung 34 ausgebildet ist. Da die virtuelle Prozessumgebung 34 korrespondierend zur realen Prozessumgebung 24 ausgebildet ist, verhält sich das virtuelle Dosiersystem 32 korrespondierend zum physikalischen Dosiersystem 22, insbesondere in Echtzeit. Anders ausgedrückt wird durch das Analysemodul 12 ein virtuelles Dosiersystem 32 dem physikalischen Dosiersystem 22 nachgebildet, wodurch die Präzision der simulierten Dosiervorgänge erhöht werden kann, ohne dass eine Beeinflussung des physikalischen Dosiersystems 22 erfolgt.

Entsprechend dem optionalen Schritt S8 simuliert das Analysemodul 12 über das virtuelle Dosiersystem 32 eine virtuelle Prozessvariable des virtuellen Dosiersystems 32 (in Echtzeit), beispielsweise des zu dosierenden Mediums. Beispielsweise kann die virtuelle Prozessvariable in Bezug auf den virtuellen Sensor 36 simuliert werden. Die virtuelle Prozessvariable ist korrespondierend zu einer realen Prozessvariable, die von einem Prozesssensor 28 des physikalischen Dosiersystems 22 erfasst wird.

Das physikalische Dosiersystem 22 wird also auch hinsichtlich geeigneter realer Prozessvariablen durch das virtuelle Dosiersystem 32 nachgebildet.

Im nachfolgenden optionalen Schritt S9 vergleicht das Analysemodul 12 die virtuelle Prozessvariable mit der realen Prozessvariable.

Auf Basis des Vergleichs der virtuellen Prozessvariable mit der realen Prozessvariable wird durch das Analysemodul 12 im nachfolgenden optionalen Schritt S10 ein Offset ermittelt, der die Differenz zwischen der virtuellen Prozessvariable und der realen Prozessvariable angibt.

Anschließend kann der ermittelte Offset entsprechend dem optionalen Schritt S11 durch das Analysemodul 12 berücksichtigt werden.

Beispielsweise kann der ermittelte Offset im Rahmen der Analyseergebnisse des Analysemoduls 12 berücksichtigt werden.

In einer Alternative kann das Analysemodul 12 den ermittelten Offset auch bei der Simulation der verschiedenen Dosiervorgänge selbst berücksichtigen.

Im Anschluss an den Schritt S2 kann das Verfahren durch den optionalen Schritt S12 weitergebildet werden, in dem das Analysemodul 12 die Dosierparameter der simulierten Dosiervorgänge mit anwendbaren Dosierparametern des physikalischen Dosiersystems 22 vergleicht. Dadurch kann das Analysemodul 12 ermitteln, ob Dosierparameter, für die die empfangene Dosieranforderungen erfüllt ist, überhaupt durch das physikalische Dosiersystem 22 geleistet werden können.

Das Analysemodul 12 hat dann entweder Dosierparameter ermittelt, die von dem physikalischen Dosiersystem 22 geleistet werden können, und durch die die empfangene Dosieranforderung erfüllt ist.

Alternativ konnte das Analysemodul 12 überhaupt keine Dosierparameter ermitteln, für die die Dosieranforderung erfüllt ist oder zumindest keine Dosierparameter, die durch das physikalische Dosiersystem 22 geleistet werden können.

Unter der Annahme, dass Dosierparameter durch das Analysemodul 12 ermittelt werden konnten, für die die Dosieranforderung durch das physikalische Dosiersystem 22 erfüllt ist, kann das Verfahren den optionalen Schritt S13 umfassen, in dem das Analysemodul 12 eine Freigabeaufforderung an einen Nutzer oder ein externes Gerät ausgibt. Beispielsweise kann das Analysemodul 12 dazu die Kommunikationsschnittstelle 16 oder die Nutzerschnittstelle 18 nutzen.

Im nachfolgenden optionalen Schritt S14 empfängt das Analysemodul 12 ein Freigabesignal von dem externen Gerät oder von einem Nutzer. Wiederum kann zur Übermittlung des Freigabesignals die Kommunikationsschnittstelle 16 oder die Nutzerschnittstelle 18 genutzt werden.

Im Anschluss umfasst das Verfahren den Schritt S15 in dem das Analysemodul 12 ein Ausgabesignal an das physikalische Dosiersystem 22 ausgibt, sofern die zumindest eine Dosieranforderung basierend auf den durch das Analysemodul 12 ermittelten Dosierparametern erfüllt wird. Das Ausgabesignal umfasst die ermittelten Dosierparameter, für die die Dosieranforderung erfüllt ist.

Sollte von dem Analysemodul 12 eine Freigabeaufforderung entsprechend dem optionalen Schritt S13 ausgegeben werden und anschließend kein entsprechendes Freigabesignal empfangen werden, so kann die Ausgabe des Ausgabesignals selbstverständlich unterbunden sein.

In einer Alternative hängt die Ausgabe des Ausgabesignals an das physikalische Dosiersystem 22 nicht von einem Freigabesignal ab. Dann kann natürlich auch die Ausgabe der Freigabeaufforderung entfallen.

Basierend auf dem Ausgabesignal, wird das physikalische Dosiersystem 22 im nachfolgenden optionalen Schritt S16 durch das Analysemodul 12 derart angesteuert und/oder parametrisiert, dass die ermittelten Dosierparameter, für die die Dosieranforderung erfüllt ist, durch das physikalische Dosiersystem 22 angewendet werden.

Unter der Annahme, dass das Analysemodul 12 keinen Dosiervorgang mit entsprechenden Dosierparametern simulieren konnte, für den die Dosieranforderung erfüllt ist, oder dass die ermittelten Dosierparameter durch das physikalische Dosiersystem 22 nicht geleistet werden können, wird anstatt des Ausgabesignals des Schritts S15, eine Fehlerinformation durch das Analysemodul 12 ausgegeben. Beispielsweise kann die Fehlerinformation anhand der Kommunikationsschnittstelle 16 oder der Nutzerschnittstelle 18 an ein externes Gerät oder an einen Nutzer des Systems 10 ausgegeben werden. Die Fehlerinformation gibt an, dass das Analysemodul 12 keine Dosierparameter ermitteln kann, für die die Dosieranforderung erfüllt ist.

Wird entsprechend des optionalen Schritts S10 ein Offset durch das Analysemodul 12 ermittelt, so kann der Offset im Rahmen des Ausgabesignals des Schritts S15 berücksichtigt werden. Dadurch kann Einfluss auf das physikalische Dosiersystem 22 derart genommen werden, dass die von dem Prozesssensor 28 erfasste reale Prozessvariable wieder mit der virtuellen Prozessvariable korrespondiert. In anderen Worten wird das physikalische Dosiersystem 22 auf Basis des Offsets kalibriert. Dadurch wird gewährleistet, dass die von dem Analysemodul 12 durchgeführte Analyse, die Dosiervorgänge des physikalischen Dosiersystems 22 im Hinblick auf die Dosieranforderung zutreffend beurteilt.

Wird der Offset durch das Analysemodul 12 entweder im Rahmen des Schritts S15 zur Anpassung des Ausgabesignals genutzt und/oder im Rahmen des Schritts S2 zur Anpassung der Simulation der unterschiedlichen Dosiervorgänge, beispielsweise zur Anpassung des virtuellen Dosiersystems 32, so kann das Verfahren nach der Anpassung erneut ausgeführt werden, um zutreffend beurteilen zu können, ob Dosiervorgänge durch das Analysemodul 12 mit entsprechenden Dosierparametern gefunden werden können, für die die Dosieranforderung erfüllt ist.

Durch die im Schritt S2 des Verfahrens simulierten Dosiervorgänge ist das Analysemodul 12 in der Lage, präzise und effizient zu ermitteln, ob Dosierparameter möglich sind, basierend auf denen die Dosieranforderung erfüllt ist. Dadurch kann die Realisierbarkeit der Dosieranforderung beurteilt werden, ohne dass dazu manuelle Testdosierungen oder Ausfallzeiten des physikalischen Dosiersystems 22 verursacht werden. Deshalb sind die Betriebseffizienz des physikalischen Dosiersystems 22 und ebenfalls des Verfahrens erhöht.

## Patentansprüche

1. Verfahren zum Steuern eines Dosiervorgangs mittels eines physikalischen Dosiersystems (22), wobei das Verfahren zumindest die folgenden Schritte umfasst:
- Empfangen zumindest einer Dosieranforderung durch ein Analysemodul (12), das mit dem physikalischen Dosiersystem (22) gekoppelt ist, das die Dosieranforderung umsetzt,
- Simulieren von unterschiedlichen Dosiervorgängen basierend auf unterschiedlichen angewendeten Dosierparametern durch das Analysemodul (12),
- Ausgeben von ermittelten Dosierparametern anhand eines Ausgabesignal vom Analysemodul (12) an das physikalische Dosiersystem (22), sofern die zumindest eine Dosieranforderung basierend auf den durch das Analysemodul (12) ermittelten Dosierparameter erfüllt wird, und
- Ausgeben einer Fehlerinformation, sofern das Analysemodul (12) keine Dosierparameter ermitteln kann, für die die zumindest eine Dosieranforderung erfüllt wird.

2. Verfahren nach Anspruch 1, **dadurch gekennzeichnet, dass** das Analysemodul (12) die ermittelten Dosierparameter mit Dosierparametern vergleicht, die von dem physikalischen Dosiersystem (22) anwendbar sind.

3. Verfahren nach Anspruch 1 oder 2, **dadurch gekennzeichnet, dass** das Analysemodul (12) unabhängig vom physikalischen Dosiersystem (22) ist, sodass das Analysemodul (12) Dosiervorgänge für unterschiedliche physikalische Dosiersysteme (22) simulieren kann.

4. Verfahren nach einem der vorherigen Ansprüche, **dadurch gekennzeichnet, dass** das Analysemodul (12) das physikalische Dosiersystem (22) basierend auf den ermittelten Dosierparametern ansteuert und/oder parametrisiert, sodass das physikalische Dosiersystem (22) die zumindest eine Dosieranforderung erfüllt.

5. Verfahren nach einem der vorherigen Ansprüche, **dadurch gekennzeichnet, dass** das Analysemodul (12) den Dosiervorgang in Echtzeit simuliert.

6. Verfahren nach einem der vorherigen Ansprüche, **dadurch gekennzeichnet, dass** die Dosieranforderung durch eine Nutzereingabe oder durch ein Gerät vorgegeben wird.

7. Verfahren nach einem der vorherigen Ansprüche, **dadurch gekennzeichnet, dass** das physikalische Dosiersystem (22) zumindest einen Prozesssensor (28) umfasst, der eingerichtet ist, eine Prozessvariable des zu dosierenden Mediums während des Dosiervorgangs zu erfassen und an das Analysemodul (12) zu übermitteln, und wobei das Analysemodul (12) die erfasste Prozessvariable beim Simulieren der unterschiedlichen Dosiervorgänge berücksichtigt.

8. Verfahren nach einem der vorherigen Ansprüche, **dadurch gekennzeichnet, dass** das physikalische Dosiersystem (22) zumindest einen Umgebungssensor (30) umfasst, der eingerichtet ist, zumindest einen Umgebungsparameter des physikalischen Dosiersystems (22) zu erfassen und an das Analysemodul (12) zu übermitteln, und wobei das Analysemodul (12) den erfassten Umgebungsparameter beim Simulieren der unterschiedlichen Dosiervorgänge berücksichtigt.

9. Verfahren nach einem der vorherigen Ansprüche, **dadurch gekennzeichnet, dass** beim Simulieren der unterschiedlichen Dosiervorgänge ein virtuelles Dosiersystem (32) berücksichtigt wird, das in einer virtuellen Prozessumgebung (34) ausgebildet ist, die korrespondierend zu einer realen Prozessumgebung (24) ausgebildet ist, in der das physikalische Dosiersystem (22) angeordnet ist, sodass sich das virtuelle Dosiersystem (32) in der virtuellen Prozessumgebung (34) korrespondierend zum physikalischen Dosiersystem (22) in der realen Prozessumgebung (24) verhält.

10. Verfahren nach Anspruch 9, **dadurch gekennzeichnet, dass** über das virtuelle Dosiersystem (32) eine virtuelle Prozessvariable des zu dosierenden Mediums simuliert wird, wobei die virtuelle Prozessvariable korrespondierend zu einer realen Prozessvariable ist, die von einem Prozesssensor (28) des physikalischen Dosiersystems (22) erfasst wird, wobei ein Offset zwischen der virtuellen Prozessvariable und der realen Prozessvariable ermittelt wird, und wobei das Ausgabesignal basierend auf dem ermittelten Offset angepasst wird, oder wobei das virtuelle Dosiersystem (32) in der virtuellen Prozessumgebung (34) basierend auf dem Offset angepasst wird.

11. Verfahren nach einem der vorherigen Ansprüche, **dadurch gekennzeichnet, dass** die zumindest eine Dosieranforderung eine Dosiermenge, eine Dosierfrequenz und/oder ein zu dosierendes Medium umfasst.

12. System (10) zum Steuern eines Dosiervorgangs, wobei das System (10) zumindest ein physikalisches Dosiersystem (22) und ein Analysemodul (12) umfasst, das mit dem physikalischen Dosiersystem (22) gekoppelt ist, wobei das Analysemodul (12) eingerichtet ist, unterschiedliche Dosiervorgänge des physikalischen Dosiersystems (22) basierend auf zumindest einer Dosieranforderung zu simulieren, und wobei das Analysemodul (12) eingerichtet ist, ermittelte Dosierparameter anhand eines Ausgabesignals an das physikalische Dosiersystem (22) auszugeben, sofern die zumindest eine Dosieranforderung basierend auf den von dem Analysemodul (12) ermittelten Dosierparametern erfüllt wird, und eine Fehlerinformation auszugeben, sofern keine Dosierparameter ermitteln werden konnten, für die die zumindest eine Dosieranforderung erfüllt wird.

13. System (10) nach Anspruch 12, **dadurch gekennzeichnet, dass** das Analysemodul (12) eingerichtet ist, den Dosiervorgang in Echtzeit zu simulieren.

14. System (10) nach Anspruch 12 oder 13, **dadurch gekennzeichnet, dass** das System (10) eingerichtet ist, ein virtuelles Dosiersystem (32) zu simulieren, das in einer virtuellen Prozessumgebung (34) ausgebildet ist, die korrespondierend zu einer realen Prozessumgebung (24) ausgebildet ist, in der das physikalische Dosiersystem (22) angeordnet ist, sodass sich das virtuelle Dosiersystem (32) in der virtuellen Prozessumgebung (34) korrespondierend zum physikalischen Dosiersystem (22) in der realen Prozessumgebung (24) verhält.

15. System (10) nach einem der Ansprüche 12 bis 14, **dadurch gekennzeichnet, dass** das physikalische Dosiersystem (22) zumindest einen Prozesssensor (28) umfasst, der eingerichtet ist, eine Prozessvariable des zu dosierenden Mediums während des Dosiervorgangs zu erfassen und an das Analysemodul (12) zu übermitteln, und wobei das Analysemodul (12) eingerichtet ist, die erfasste Prozessvariable beim Simulieren der unterschiedlichen Dosiervorgänge zu berücksichtigen, und/oder dass das physikalische Dosiersystem (22) zumindest einen Umgebungssensor (30) umfasst, der eingerichtet ist, zumindest einen Umgebungsparameter des physikalischen Dosiersystems (22) zu erfassen und an das Analysemodul (12) zu übermitteln, und wobei das Analysemodul (12) eingerichtet ist, den erfassten Umgebungsparameter beim Simulieren der unterschiedlichen Dosiervorgänge zu berücksichtigen.
